# EUROPEAN PATENT SPECIFICATION

(11) **EP 4 532 182 B1**
(45) Date of publication and mention of the grant of the patent: **29.04.2026**
(21) Application number: 23728048.2
(22) Date of filing: 23.05.2023
(51) Int. Cl.: B29C 70/44, B29C 70/86, B29D 99/00, C08F 230/08, C08F 283/01, C08K 5/5425, C08K 5/544, C08K 5/548, C09D 4/06, C09D 167/06, C09D 183/04, C09D 183/08, B29L 31/08, B29C 70/48, C08G 77/20, C08G 77/26, C08G 77/28

(54) **METHOD OF IMPROVING THE ADHESIVE BONDING OF WIND TURBINE BLADE COMPONENTS**
VERFAHREN ZUR VERBESSERUNG DER VERKLEBUNG VON WINDTURBINENSCHAUFELBAUTEILEN
PROCÉDÉ D'AMÉLIORATION DU COLLAGE DES COMPOSANTS DE PALE D'ÉOLIENNE

(30) Priority: 24.05.2022 EP 22175166
(43) Date of publication of application: 09.04.2025
(73) Proprietor: LM Wind Power A/S, 6000 Kolding (DK)
(72) Inventor: SØRENSEN, Flemming Kiel, 6000 Kolding (DK); BOUTRUP, Jacob Lousdal, 6000 Kolding (DK)
(74) Representative: COPA Copenhagen Patents
(86) International application number: PCT/EP2023/063734
(87) International publication number: WO 2023/227574

(56) References cited:
- EP-A1- 2 192 602
- WO-A1-2017/220740
- WO-A1-2021/213651

## Description

### Field of the invention

The present invention relates to a methods for improving the adhesive bonding of wind turbine blade components, in particular in manufacturing a blade shell member comprising a spar cap for a wind turbine blade. Specifically, the present invention relates to a method of manufacturing a wind turbine blade shell member and to a use of a silane-containing primer composition to improve the bonding between a first wind turbine blade component and a second wind turbine blade component.

### Background of the invention

Climate change has created an urgent need for sustainable energy, putting the spotlight on wind power as a cost-effective and clean energy source. Wind turbines typically comprise a tower, generator, gearbox, nacelle, and one or more rotor blades, which capture kinetic energy of wind using known airfoil principles. With increasing energy demand, modern wind turbines can have power ratings of above 10 MW and may have rotor blades that exceed 100 meters in length.

Wind turbine blades are typically made from a fibre-reinforced polymer material and comprise a pressure side shell half and a suction side shell half. The cross-sectional profile of a typical blade includes an airfoil for creating an air flow leading to a pressure difference between both sides. The resulting lift force generates torque for producing electricity. Wind turbine blades are usually manufactured by forming two shell parts or shell halves from layers of woven fabric or fibre and resin. Spar caps or main laminates are placed or integrated in the shell halves and may be combined with shear webs or spar beams to form structural support members. Spar caps or main laminates may be joined to, or integrated within, the inside of the suction and pressure halves of the shell.

As the size of wind turbine blades increases, various challenges arise from the blades being subjected to increased forces during operation, requiring improved reinforcing structures. In some known solutions, pultruded fibrous strips of material are used to manufacture spar caps. Pultrusion is a continuous process in which fibres are pulled through a supply of liquid resin and then heated in a chamber where the resin is cured. Such pultruded strips can be cut to any desired length. As such, the pultrusion process is typically associated with a continuous process that produces composite parts having a constant cross-section. Thus, a plurality of pultrusions can be vacuum infused together in a mould to form the spar caps.

Typical spar caps may comprise a plurality of carbon pultrusion elements and possibly one or more interlayers arranged between the carbon pultrusion elements. Such spar caps may be produced directly in the wind turbine blade moulds or in a separate offline mould where they are resin infused and then subsequently lifted into the main blade shell mould which is then infused with resin.

Different combinations of resins may be used for the spar cap and the main blade shell. It is critical to ensure a sufficiently strong adhesion between the shell and the pre-manufactured spar cap since bonding of resin onto the pre-cast main spar is crucial for the structural integrity of the blade. Vinyl ester or epoxy ester resins have good adherence properties and are often used, whereas other resins, such as polyester resin, have an attractive price. However, the adhesion properties of polyester resin are low compared to vinyl ester and epoxy resin. The use of a primer on the spar cap increase the adherence properties at the resin interface. Where the spar cap is made offline, primer may be applied to one or more surfaces of the spar cap before it is placed in the blade mould. Although a primer may enhance adhesion strength, several challenges exist in handling and process control.

Known primers are based on isocyanate chemistry and may react instantly with moisture in the air. Thus, the efficacy of the primer is reduced over time, especially at high humidity. Thus, the time from appliance of the first primer layer to the time of resin infusion is critical, and a prolonged processing time may affect the primer properties and the structural integrity of the blade.

Additionally, such known primers usually have a rather low flash point, implying high flammability and thus work hazards. Furthermore, known bonding methods that rely on the use of primers necessitate prior grinding of one or more surfaces of the premanufactured spar cap. This often leads to a dusty and noisy work environment, and associated health risks.

Hence, improved methods to ensure a sufficiently strong adhesion between the shell and the premanufactured spar cap at a reduced cost would be advantageous.

WO 2021/213651 A1 relates to a method of manufacturing a blade shell member for a wind turbine blade, comprising applying a first primer layer on top of fibre-reinforced layers at a pre-determined spar cap region. A pre-manufactured spar cap contacts the first primer layer arranged on a spar cap region, and a second primer layer is applied to the upper surface of the pre-manufactured spar cap before the step of infusing the blade moulding cavity with resin and curing it.

EP 2 192 602 A1 discloses a composite material comprising a curable resin, especially adhesive such as epoxy, and tagging particles, especially magnetic particles, e.g. ferrite, which facilitates the non-destructive testing of adhesive bonds in aircraft components or wind turbines using eddy currents, ultrasound and other techniques.

It is therefore an object of the present invention to provide an improved method of manufacturing a blade shell member comprising a spar cap.

It is another object of the present invention to provide a method of manufacturing a blade shell member having sufficiently strong adhesion between the shell and the pre-manufactured spar cap at a reduced cost.

It is another object of the present invention to provide a method of manufacturing a blade shell member which is more efficient, safer and more environmentally friendly.

### Summary of the invention

It has been found that one or more of the aforementioned objects can be obtained by a method of manufacturing a wind turbine blade shell member, the method comprising the steps of providing a blade mould for the blade shell member, the blade mould comprising a moulding cavity, arranging one or more layers of fibre material in the moulding cavity to provide a fibre layup, providing a pre-manufactured spar cap member, treating a surface of the spar cap member with a primer composition to provide a primer-treated surface, applying heat to the primer-treated surface of the spar cap member to provide an activated surface, placing the spar cap member into the moulding cavity on top of at least part of the fibre layup, such that at least part of said activated surface of the spar cap member contacts the fibre layup, infusing the moulding cavity with resin, curing the resin to form the blade shell member, wherein the primer composition comprises a silane compound.

It was surprisingly found that this method results in up to five times higher bond strengths between the spar cap and the shell member. In particular, the fracture toughness at the interface between a pre-manufactured spar cap member, in particular containing a vinyl ester, and a fibre layup infused with a polyester resin, in particular an unsaturated polyester resin, was found to be greatly improved by the method of the present invention. In addition, it was found that the method of the present invention does not require a spar cap grinding operation contrary to known methods of joining a spar cap to a shell laminate, leading to a safer and more environmentally friendly work environment. Surprisingly, the primer composition of the present invention was also found to be stable to moisture in the air, leading to a significant improvement in storage time.

Using the method of the present invention, a spar cap member that is pre-manufactured, for example, in an offline spar cap mould by infusing a carbon fibre material with vinyl ester or epoxy ester, can be optimally bonded to an inner shell surface by co-infusing the shell and the spar cap member in the blade mould for example with a polyester infusion resin to form the spar cap-reinforced wind turbine shell member. The resultant wind turbine shell member has a sufficiently strong adhesion between the shell and the pre-manufactured spar cap at a reduced cost.

The method of the present invention is for providing a blade shell member, such as a suction side shell member or a pressure side shell member. It is to be understood that the same method may be used for providing a suction side shell member as well as a pressure side shell member. The only difference between providing the pressure side shell member and the suction side shell member would be the shape of the blade mould.

The wind turbine blade is usually manufactured from two shell members or shell halves, a pressure side shell half and a suction side shell half. Such shell members are typically formed in separate open blade moulds conforming to the aerodynamic shapes of the shell halves, which are subsequently joined together by closing the blade moulds to form a wind turbine blade. Thus, the wind turbine blade shell member manufactured by the method of the present invention typically is a shell half, such as a shell half with a reinforcing structure such as a spar cap. The blade shell material may include one or more fibre layers and/or a gelcoat. In a preferred embodiment, the pressure side shell half and the suction side shell half each have a longitudinal extent L of 50-120 m, preferably 60-110 m.

One or more layers of fibre material, preferably a plurality of layers of fibre material comprising glass fibres such as glass fibre fabrics, are arranged in the moulding cavity to provide a fibre layup, typically comprising an outer surface facing towards the moulding surface and conforming to an aerodynamic outer shape of the blade half, and an inner surface onto which the spar cap member or a plurality of spar cap members are placed to form the spar cap-reinforced shell member.

The pre-manufactured spar cap member may be a pre-manufactured spar cap. In some embodiments, the pre-manufactured spar cap member is part of the spar cap of the wind turbine blade member to be produced, such as a pultrusion plate. Thus, a plurality of spar cap members, such as a plurality of pultruded plates, may be placed into the mould to form the spar cap.

The pre-manufactured spar cap member is preferably an elongated element having an upper surface, a lower surface, a first side surface, a second side surface, a first end surface and a second end surface. Typically, spar cap will extend over 60-95% of the blade length. Preferably, the spar cap comprises a plurality of such pre-manufactured spar cap members, such as a plurality of pultrusion plates arranged in a stacked arrangement. The plurality of pultrusion plates preferably forming the spar cap will typically extend in a spanwise direction of the shell half or of the blade. Thus, at least some of the pultrusion plates have preferably a length corresponding to 60-95% of the blade length. A polymer resin, such as a polyester resin, in particular an unsaturated polyester resin, is typically co-infused into the fibre layup and into the pultrusion plates following the arrangement of all elements to form the shell half with the spar cap.

In some embodiments, the step of providing the pre-manufactured spar cap comprises the steps of providing a plurality of pultruded carbon fibre-containing planks and optionally a number of interlayers comprising fibre material for promoting resin flow between the pultruded planks, arranging the plurality of pultruded planks in a stacked array, optionally wherein the plurality of pultruded planks are separated by respective interlayers; and infusing and optionally curing the plurality of pultruded planks with resin. The pultruded planks are preferably elongated elements with a rectangular cross-section and made from a fibre material comprising carbon fibres and a resin, preferably a vinyl ester resin. Alternatively, they may be hybrid pultrusion elements comprising a second type of reinforcement fibres, such as glass fibres. The optional interlayers may comprise fibre material, such as glass fibres or polymeric material for promoting resin flow between the pultruded planks.

It is preferred that the pre-manufactured spar cap member comprises a fibre material, such carbon fibres, preferably pultruded carbon fibres, which has been infused with a vinyl ester or epoxy resin to form the pre-manufactured spar cap member. A spar cap member in the form of a pultrusion plates is preferably manufactured by passing resin-impregnated, preferably vinyl ester-impregnated, tows of fibre material through a pultrusion die. The continuous pultrusion string exiting the pultrusion die can be cut into individual pultrusion plates, for example having a length of between 30-200 meters, preferably 50-100 meters, preferably by using a cutter. The shaped impregnated plates are then preferably cured to form the pre-manufactured spar cap member.

The pre-manufactured spar cap member may have an upper surface, a lower surface, a first side surface, a second side surface, a first end surface and a second end surface. Typically, the pre-manufactured spar cap member is arranged in the moulding cavity such that the lower surface of the pre-manufactured spar cap member contacts the fibre layup of the shell. In some embodiments, the upper surface and lower surface of the spar cap member are preferably arranged opposite each other and may have substantially the same size. In the same way, the first and second side surfaces of the spar cap member may be arranged opposite each other and have substantially the same sizes, and the first and second end surfaces may be arranged opposite each other and preferably have substantially the same sizes.

Where the pre-manufactured spar cap member is, or comprises, a pultrusion plate, the length of the pultrusion plate is typically between 50 and 150 meters, preferably between 50 and 100 meters, more preferably between 70 and 100 meters. The height/thickness of the pultrusion plate is preferably between 2 and 10 millimeters, preferably between 3 and 7 millimeters, most preferably between 4 and 6 millimeters. The width of the plate is preferably between 20 and 300 millimeters, most preferably between 80 and 150 millimeters. In a preferred embodiment, the reinforcing structure, such as the spar cap, comprises between 1 and 15 stacks of pultrusion plates arranged next to each other, more preferably between 3 and 9 stacks. Each stack may comprise up to 20 pultrusion plates arranged on top of each other, such as 2-20 pultrusion plates or 2-10 pultrusion plates. Thus, each reinforcing section, such as each spar cap, may comprise 10 to 200 pultrusion plates.

The pultrusion fibre material preferably comprises a plurality of tows or rovings of carbon fibre material, formed into a pultruded carbon fibre preform, and a plurality of tows or rovings of glass fibre material. Thus, each pultrusion plate may comprise 20-200 tows of fibre material in total. The tows will usually extend in the length direction of the pultrusion plate, i.e. substantially parallel to its longitudinal axis, or parallel to the spanwise direction when arranged in the blade shell. In a preferred embodiment, the tows of fibre material are arranged in a regular array or regular grid of rows and columns of tows, as seen in a vertical cross section of the pultrusion plate. The pultrusion plate preferably comprises at least 10 rows and at least 10 columns of tows.

The step of treating, such as impregnating, a surface of the spar cap member with a primer composition to provide a primer-treated surface is preferably carried out using a brush, such as a foam brush, or by using a roller device. In some embodiments, the primer composition can be applied using a spray gun.

It is particularly preferred that at least a lower surface or bottom surface of the spar cap member is treated with the primer composition of the present invention. The lower surface or bottom surface of the spar cap member is the surface that faces towards and contacts the fibre layup in the blade mould when the spar cap is arranged in the blade mould. Thus, the lower surface or bottom surface of the spar cap member is the surface that faces towards the inner shell surface of the blade shell member. In some embodiments, also other surfaces of the spar cap member are treated with the primer composition, such as the upper surface or top surface, and/or the side surfaces or end surfaces of the spar cap member.

In some embodiments, the fibre lay-up comprises a predetermined mounting region for placement of the pre-manufactured spar cap member. In some embodiments, also the predetermined mounting region on the fibre lay-up is treated with the primer composition. In some embodiments, the predetermined mounting region for placement of the pre-manufactured spar cap member may comprise a recess formed in the inner surface of the shell material, i.e. the upward facing surface of the fibre lay-up in the moulding cavity.

The surface of the spar cap member may be treated with the primer composition such that said surface is impregnated with the primer composition. In a preferred embodiment, the primer composition is applied to the surface of the spar cap member in an amount of 20-50 g/m2, preferably in an amount of 30-35 g/m2.

The primer composition is preferably a liquid composition, preferably comprising an organic solvent. Preferably, the silane compound of the primer composition is an organic silane compound. The primer composition may contain, or may be derived from, one or more reactive silanes containing both organofunctional and hydrolyzable groups. Advantageously, such silane compounds participate in the cross-linking reactions, but also establishes bonds between the silicone network and the substrate. The silane compound is preferably derived from hydrolyzation of a silane of the general structure RSiX3, where R is, or comprises, a reactive organofunctional group and X is, or comprises, a hydrolyzable group, such as a methoxy, ethoxy or acetoxy group. Preferably, the silane compound of the primer composition comprises silanol groups. Such silanol groups advantageously allow condensation reactions to occur, which result in the formation of Si-O-Si bonds between the silane monomers. Advantageously, the organofunctional group of the silane compound reacts with chemical reactive groups present in the resin used for infusing the blade moulding cavity, preferably a polyester resin, most preferably an unsaturated polyester resin. The organofunctional group may be selected from aminoalkyl, mercaptoalkyl, epoxyalkyl, ureidoalkyl, acrylate and isocyanurate groups.

In a preferred embodiment, the silane compound comprises a (meth)acrylate group, preferably a (meth)acrylate end group. In a preferred embodiment, the silane compound comprises a methacryloxy moiety, such as a (methacryloxy)alkyl moiety, such as (methacryloxy)propyl. In a preferred embodiment, the silane compound is a methacrylate-functional silane.

Preferably, the silane compound is, or comprises, or is polymerized from, a hydroxysilylalkyl methacrylate. In a particularly preferred embodiment, the silane compound comprises, or is polymerized from, 3-(trihydroxysilyl)propyl methacrylate. In a preferred embodiment, the silane compound is an oligomeric or a polymeric silane compound, preferably a polymeric organo alkoxysilane compound. In a particularly preferred embodiment, the silane compound is a polymeric organo alkoxysilane compound comprising (meth)acrylate groups, preferably methacrylate groups.

In a preferred embodiment, the silane compound is capable of forming a polymeric silane compound, preferably a polymeric organo alkoxysilane compound. In a particularly preferred embodiment, the silane compound is capable of forming a polymeric organo alkoxysilane compound comprising (meth)acrylate groups, preferably methacrylate groups.

In a particularly preferred embodiment, the silane compound of the primer composition is obtainable by hydrolysis of a trialkoxysilylpropyl methacrylate, preferably 3-(trimethoxysilyl)propyl methacrylate. It is particularly preferred that the silane compound is an oligomer or a polymer obtained from the polymerization 3-(trimethoxysilyl)propyl methacrylate monomers. Thus, it is preferred that the silane compound of the primer composition comprises polymerized 3-(trimethoxysilyl)propyl methacrylate.

In a preferred embodiment, the silane compound is obtained by hydrolysis of an alkoxysilane monomer or of an organo alkoxysilane monomer, preferably by hydrolysis of an organo alkoxysilane with a trimethoxysilane moiety and a methacrylate moiety, optionally followed by a condensation reaction between the hydrolysed silane compounds, preferably a polycondensation via silanol groups, to form siloxane bridges (Si-O-Si). In some embodiments, when applied to a surface, such as to a surface of a spar cap member, preferably a spar cap member containing a vinyl ester resin, it is preferred that a condensation reaction occurs between the hydrolysed silane compounds, preferably a polycondensation via silanol groups, to form siloxane bridges (Si-O-Si).

It is thus preferred that the silane compound is a polymeric silane compound obtained via silanol condensation to form siloxane bonds, or that the silane compound is polymerizable to form a polymeric silane compound obtained via silanol condensation to form siloxane bonds.

In a preferred embodiment, the silane compound, or a precursor thereof, comprises a methacryloxy functionality and a methoxy silane functionality. The methacryloxy functionality can be advantageously used in a free radical cure with a suitable resin, such as unsaturated polyester resins, which can be advantageously used for infusing the blade moulding cavity. This advantageously leads to strong bonds between the shell fibre material and the primer-treated spar cap member. It is thus particularly preferred that the silane compound is obtained by hydrolysis of γ-methacryloxypropyltrimethoxysilane and subsequent condensation, preferably polycondensation, via the respective silanol groups of the monomers.

Prior to the step of applying heat to the primer-treated surface of the spar cap member the method of the present invention may comprise a step of drying the primer-treated surface(s) of the spar cap member and/or of the fibre-layup. Said drying step may be carried out at a temperature of 20-40°C for a time period of 10-150 minutes.

The step of applying heat to the primer-treated surface of the spar cap member to provide an activated surface preferably comprises heating said primer-treated surface to a temperature of 80-130°C, preferably 90-120 °C. Preferably, covalent bonds are formed in said heat activation step between the silane compound of the primer composition and the resin, preferably vinyl ester resin, of the spar cap member(s). In a preferred embodiment, the step of applying heat to the primer-treated surface comprises heating said primer-treated surface to a temperature of 80-130°C, preferably 90-120 °C, for a time period of 3-60 minutes, preferably 5-30 minutes. The heating step is preferably carried out using an infrared heating device. Using such device, it was found that the treated spar cap surface can achieve the desired heating temperature, for example >120 °C, in less then 30 seconds, leading to a particularly efficient process. It was also surprisingly found that when using such heating conditions, there was no risk of spar deformation as the maximum temperature at a depth of 8 mm below the spar cap surface was below 85°C.

The step of placing the spar cap member into the moulding cavity on top of at least part of the fibre layup preferably comprises placing the spar cap on a predetermined spar cap mounting region on the fibre layup, i.e. on the inner surface or upwardly facing surface of the fibre layup in the blade mould. At least part of said activated surface of the spar cap member, preferably the lower surface or bottom surface of the spar cap, is placed in contact with the fibre layup. The bonding advantageously occurs at the interface between the fibre layup and the treated surface of the spar cap member.

The spar cap member is typically affixed to an inner surface of the shell member, such as the shell half. The step of placing the spar cap member(s), which may take the form of pultrusion plates, into the moulding cavity on the fibre layup preferably comprises arranging the pultrusion plates into adjacent stacks of pultrusion plates, wherein adjacent refers to a substantially chordwise direction. These stacks usually extend in a substantially spanwise direction of the shell half. The step of bonding the spar cap member(s), such as pultrusion plates, with the blade shell material to form the blade shell member usually comprises a resin infusion step in which the pultrusion plates and the blade shell material are co-infused with a resin, preferably a polyester resin, such as an unsaturated polyester resin, for example in a VARTM process.

Thus, in the steps of infusing the moulding cavity with resin and curing the resin to form the blade shell member, the fibre lay-up and the spar cap member(s) with the activated surface(s) are preferably co-infused with a resin such as epoxy, polyester or vinyl ester. A particularly preferred resin for this step is a polyester resin, preferably an unsaturated polyester resin.

In a preferred embodiment, the pre-manufactured spar cap member has a top surface and an opposing bottom surface. In some embodiments, the primer composition is applied at least to the bottom surface of the spar cap member. In some embodiments, the primer composition is applied to the bottom surface and to the top surface of the spar cap member. In some embodiments, the primer composition is applied to all surfaces of the spar cap member before it is placed in the blade mould.

In a preferred embodiment, providing the pre-manufactured spar cap member comprises the steps of: providing a plurality of pultruded carbon elements, arranging the plurality of pultruded carbon elements into a stacked arrangement, and infusing the plurality of pultruded carbon elements with a resin, preferably a viny ester resin, and curing the resin to provide the pre-manufactured spar cap member.

In a preferred embodiment, the step of infusing the moulding cavity with resin comprises infusing the moulding cavity with a polyester resin, preferably an unsaturated polyester resin. In a preferred embodiment, the step of infusing the moulding cavity with resin is carried out by vacuum-assisted resin transfer moulding.

In a preferred embodiment, the pre-manufactured spar cap member comprises a vinyl ester resin. In a preferred embodiment, the pre-manufactured spar cap member has been infused with a vinyl ester resin during the manufacturing of the pre-manufactured spar cap member.

In a preferred embodiment, the silane compound is a polymer comprising a repeating unit of formula (I): 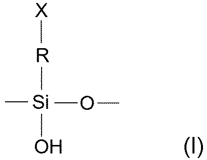 wherein X is an organic group, preferably a non-hydrolyzable organic group, preferably selected from amino, vinyl, epoxy, methacrylate, sulfur, alkyl, alkenyl, alkynyl, most preferably methacrylate, and wherein R is a spacer such as -(CH₂)ₙ-, wherein n is 0 to 1000, preferably 1-5, most preferably 3.

In a preferred embodiment, the silane compound is polymerizable to a polymer comprising a repeating unit of formula (I): 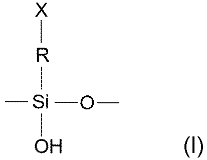 wherein X is an organic group, preferably a non-hydrolyzable organic group, preferably selected from amino, vinyl, epoxy, methacrylate, sulfur, alkyl, alkenyl, alkynyl, most preferably methacrylate, and wherein R is a spacer such as -(CH₂)ₙ-, wherein n is 0 to 1000, preferably 1-5, most preferably 3.

In a preferred embodiment, the silane compound is derived from hydrolysation and subsequent (poly)condensation of X-R¹-Si(OR²)₃ monomers, wherein X is a non-hydrolyzable organic group, such as amino, vinyl, epoxy, methacrylate, sulfur, alkyl, alkenyl, alkynyl, preferably methacrylate; R¹ is a spacer such as -(CH₂)ₙ-, wherein n is 0 to 1000, preferably 1-5, most preferably 3; R² is independently selected from hydrogen, optionally substituted alkyl, optionally substituted alkenyl, optionally substituted alkynyl, optionally substituted carbocyclyl, optionally substituted aryl, optionally substituted 5-10 membered heteroaryl, and optionally substituted 5-10 membered heterocyclyl, preferably alkoxy, most preferably methoxy.

In a preferred embodiment, the step of providing an activated surface comprises forming a chemical bond between the silane compound of the primer composition and hydroxy groups of the spar cap member, preferably hydroxy groups of a vinyl ester resin of the spar cap member, by applying heat to the primer-treated surface of the spar cap member.

In a preferred embodiment, the resin is an unsaturated polyester resin, and wherein the step of curing the resin to form the blade shell member comprises a free-radical crosslinking reaction between the silane compound, or a polymer thereof, and the unsaturated polyester resin, preferably between the (meth)acrylate groups of the silane compound of the primer composition, or a polymer thereof, and the unsaturated polyester resin.

In a preferred embodiment, the primer composition comprises a carrier solvent, wherein the carrier solvent comprises
1-methoxy-2-propanol and
an ester of a dicarboxylic acid, such as dimethyl glutarate, dimethyl succinate and dimethyl adipate or mixtures thereof, such as a mixture containing 57-67 wt% dimethyl glutarate, 18-28 wt% dimethyl succinate, and 8-22 wt% dimethyl adipate. In a preferred embodiment, the weight ratio of 1-methoxy-2-propanol to the ester of a dicarboxylic acid is between 1:2 to 2:1, preferably from 1:1.2 to 1.2:1. Such mixture are found to be both silane compatible and sufficiently non-flammable. Thus, in a preferred embodiment, the primer composition has a flash point of at least 39 °C.

According to some embodiments, the method of the present invention further comprises a step of arranging one or more shear webs in at least one of the shell members such as one of the shell halves, usually at the location of the reinforcing structure. Each shear web may comprise a web body, a first web foot flange at a first end of the web body, and a second web foot flange at a second end of the web body. In some embodiments, the shear webs are substantially I-shaped. Alternatively, the shear webs may be substantially C-shaped.

In another aspect, the present invention relates to a wind turbine blade shell member obtainable by the method of the present invention. The skilled person will understand that the chemical composition of the various compounds, in particular at the interface of the primer and the resin, will change during the course of the method of the present invention. For example, preferably, the spar cap member comprises a vinyl ester resin, such that hydroxy (OH) groups of the vinyl ester resin in the surface of the spar cap member can form hydrogen bonds with the primer-treated spar cap member surface. When heating the primer-treated surface, covalent bonds can be formed between a polymeric organo alkoxysilane of the primer and the vinyl ester of the spar cap member. Thus the method of the present invention is found to result in a strong bonding of the primer composition to the spar cap member surface, as a direct result of the method steps. It was thus surprisingly found that a spar-cap reinforced wind turbine blade shell member, such as shell half, is associated with a greatly improved bonding strength and fracture toughness, as compared to shell members obtained by known processes.

For the wind turbine blade shell member obtainable by the method of the present invention, it is particularly preferred that at least a lower surface or bottom surface of the spar cap member has been treated with the primer composition of the method of the present invention. The lower surface or bottom surface of the spar cap member is the surface that faces towards and contacts the fibre layup in the blade mould when the spar cap is arranged in the blade mould. Thus, the lower surface or bottom surface of the spar cap member is the surface that faces towards the inner shell surface of the blade shell member. In some embodiments of the wind turbine blade shell member, also other surfaces of the spar cap member have been treated with the primer composition when carrying out the method of the present invention, such as the upper surface or top surface, and/or the side surfaces or end surfaces of the spar cap member.

The wind turbine blade shell member obtainable by the method of the present invention may be a suction side shell member or a pressure side shell member, or it may be a wind turbine blade.

The present invention also relates to a wind turbine blade having a pressure side shell half and a suction side shell half, wherein the suction and pressure side shell halves are joined along a leading and trailing edge of the blade. One or both of the suction and pressure side shell halves may be obtained by the method of the present invention.

In another aspect, the present invention relates to a use of a silane-containing primer composition to improve the bonding between a first wind turbine blade component and a second wind turbine blade component, by treating a surface of the first wind turbine blade component and/or of the second wind turbine blade component with the primer composition prior to joining and co-infusing the first wind turbine blade component to the second wind turbine blade component with a resin, preferably a polyester resin, most preferably an unsaturated polyester resin. Preferably, the blade components are joined along the primer-treated surface(s).

The primer composition of said use is preferably a liquid composition, preferably comprising an organic solvent. Preferably, the silane compound of the primer composition is an organic silane compound, as described in detail above.

The first wind turbine blade component is preferably a fibre-reinforced shell part, such as a shell half comprising a predetermined spar cap mounting region, and the second wind turbine blade component is preferably a spar cap or a main laminate. It is preferred that the second component comprises a vinyl ester resin and/or has been manufactured by infusing a fibre material, preferably comprising carbon fibres, with a vinyl ester resin.

Said use preferably further comprises applying heat to the primer-treated first wind turbine blade component and/or to the primer-treated second wind turbine blade component to provide an activated surface prior to joining and co-infusing the first wind turbine blade component to the second wind turbine blade component with a resin.

All features and embodiments discussed above with respect to the method of manufacturing a wind turbine blade shell member likewise apply to the use of a silane-containing primer composition and to the wind turbine blade shell member of the present invention and vice versa.

As used herein, the term "silane" refers to a compound containing a silicon atom in the backbone. The term "silane" may refer to an organic compound containing one or more silicon atoms. The term "silane" may thus refer to any silicon analog of a substituted or unsubstituted hydrocarbon. As used herein, the term "silane" can comprise mixtures of different silane compounds.

As used herein, the term "methacrylate-functional silane" refers to silanes comprising methacrylate functional groups. Methacrylates are derivatives of methacrylic acid. As used herein, the term "spanwise" is used to describe the orientation of a measurement or element along the blade from its root end to its tip end. In some embodiments, spanwise is the direction along the longitudinal axis and longitudinal extent of the wind turbine blade.

### Description of the invention

The invention is explained in detail below with reference to an embodiment shown in the drawings, in which
Fig. 1 shows a wind turbine,
Fig. 2 shows a schematic view of a wind turbine blade,
Fig. 3 shows a schematic view of a cross-section of a wind turbine blade,
Fig. 4 is a schematic top view of a shell half of a wind turbine blade,
Fig. 5 is a schematic view illustrating various stages of preparing and using a silane-based primer,
Fig. 6 illustrates various steps of a method of manufacturing a blade shell member according to the present invention,
Fig. 7 is a chart of measured bonding strengths between wind turbine blade components, and
Fig. 8 is a chart of bonding strength between two wind turbine blade components over time.

### Detailed description of the figures

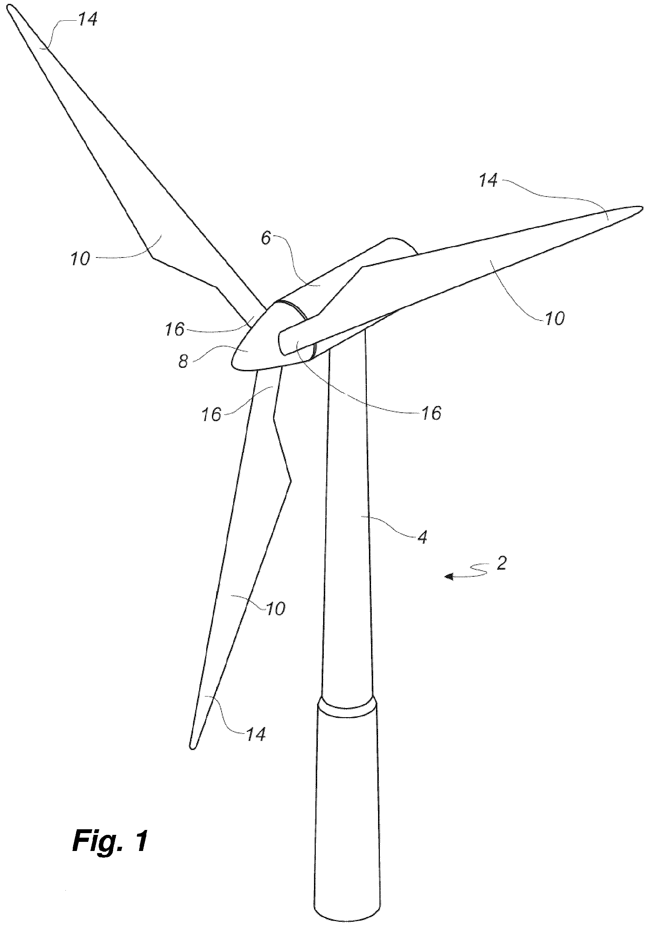

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 farthest from the hub 8. The rotor has a radius denoted R.

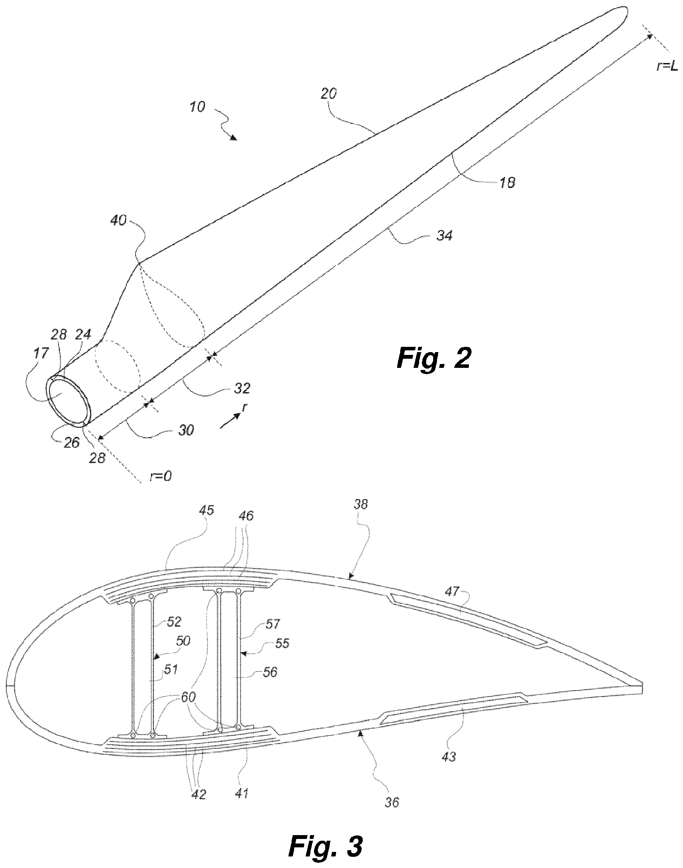

Fig. 2 shows a schematic view of a wind turbine blade 10. The wind turbine blade 10 has the shape of a conventional wind turbine blade and comprises a root region 30 closest to the hub, a profiled or an airfoil region 34 farthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance rfrom the hub. The airfoil region 34 has an airfoil profile with a chord extending between the leading edge 18 and the trailing edge 20 of the blade 10. The width of the chord decreases with increasing distance *r* from the hub.

A shoulder 40 of the blade 10 is defined as the position, where the blade 10 has its largest chord length. The shoulder 40 is typically provided at the boundary between the transition region 32 and the airfoil region 34. Fig. 2 also illustrates the longitudinal extent L, length or longitudinal axis of the blade.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub. The blade is typically made from a pressure side shell part 36 and a suction side shell part 38 that are glued to each other along bond lines at the leading edge 18 and the trailing edge of the blade 20.

Fig. 3 shows a schematic view of a cross section of the blade. As previously mentioned, the blade 10 comprises a pressure side shell part 36 and a suction side shell part 38. The pressure side shell part 36 comprises a spar cap 41, also called a main laminate, which constitutes a load bearing part of the pressure side shell part 36. The spar cap 41 comprises a plurality of fibre layers 42 mainly comprising unidirectional fibres aligned along the longitudinal direction of the blade in order to provide stiffness to the blade. The suction side shell part 38 also comprises a spar cap 45 comprising a plurality of fibre layers 46. The pressure side shell part 36 may also comprise a sandwich core material 43 typically made of balsawood or foamed polymer and sandwiched between a number of fibre-reinforced skin layers. The sandwich core material 43 is used to provide stiffness to the shell in order to ensure that the shell substantially maintains its aerodynamic profile during rotation of the blade. Similarly, the suction side shell part 38 may also comprise a sandwich core material 47.

The spar cap 41 of the pressure side shell part 36 and the spar cap 45 of the suction side shell part 38 are connected via a first shear web 50 and a second shear web 55. The shear webs 50, 55 are in the shown embodiment shaped as substantially I-shaped webs. The first shear web 50 comprises a shear web body and two web foot flanges. The shear web body comprises a sandwich core material 51, such as balsawood or foamed polymer, covered by a number of skin layers 52 made of a number of fibre layers. The blade shells 36, 38 may comprise further fibre-reinforcement at the leading edge and the trailing edge. Typically, the shell parts 36, 38 are bonded to each other via glue flanges.

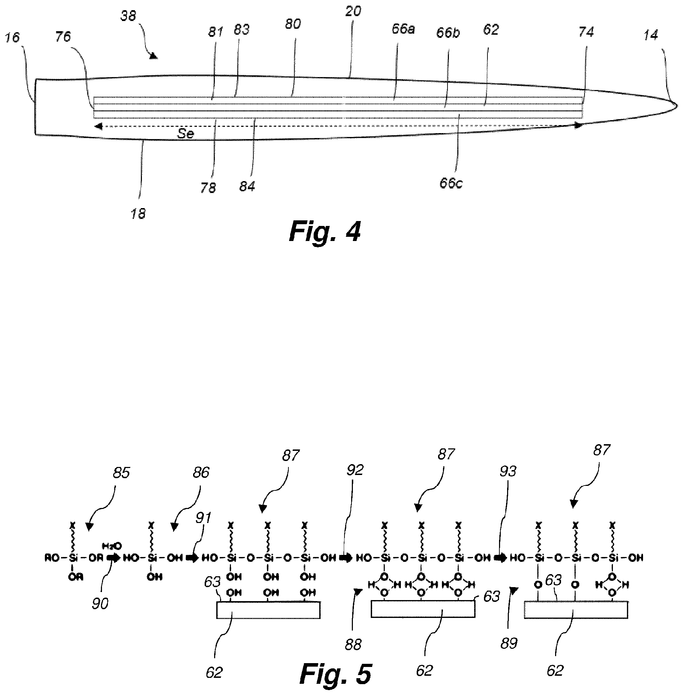

Fig. 4 is a schematic top view of a shell half 38 of a wind turbine blade according to the present invention, illustrating the location of a reinforcing structure 62, such as a spar cap, having a spanwise extent Se. In the illustrated embodiment, the reinforcing structure 62 comprises three adjacent stacks 66a, 66b, 66c of pultrusion plates. As seen in Fig. 4, the elongate reinforcing structure 62 extends in a substantially spanwise direction of the blade, with adjacent stacks 66a, 66b, 66c of pultrusion plates. The elongate reinforcing structure 62 has a tip end 74, closest to the tip end of the blade, and a root end 76, closest to the root end of the blade. The elongate reinforcing structure also comprises a spanwise extending front edge 78, which is closest to the leading edge 18 of the blade, and a spanwise extending rear edge 80, which is closest to the trailing edge 20 of the blade.

Fig. 5 is a schematic view illustrating various stages of preparing and using a silane-based primer on a surface 63 of a pre-fabricated spar cap member 62. First, an organo alkoxysilane monomer 85 is hydrolyzed, see step 90. The moiety X preferably comprises a methacrylate moiety. Preferably, RO/OR is an alcohol moiety. The hydrolyzed monomers are then polymerized, step 91, in a condensation reaction to form a polymer 87 with siloxane bridges (Si-O-Si). The surface 63 of the spar cap member 62 is then treated with this primer composition comprising the polymer 87, step 92. Preferably, the spar cap member 62 comprises a vinyl ester resin, such that hydroxy (OH) groups of the vinyl ester resin in the surface 63 of the spar cap member 62 can form hydrogen bonds 88 with the spar cap member surface 63. Upon heating the primer-treated surface, step 93, covalent bonds 89 are formed between the polymeric organo alkoxysilane 87 and the vinyl ester of the spar cap member, leading to a strong bonding of the primer composition to the spar cap member surface.

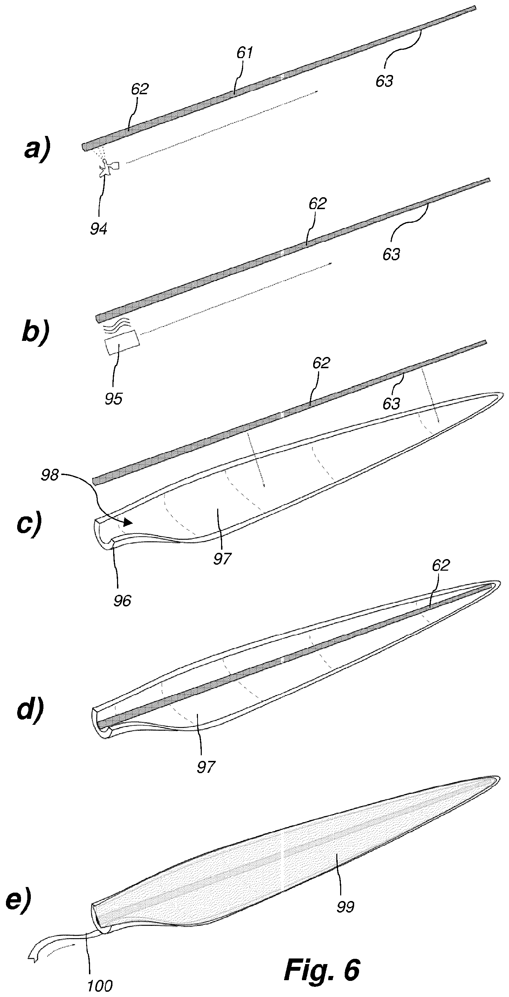

Fig. 6 illustrates various steps of a method of manufacturing a blade shell member according to the present invention. A pre-manufactured spar cap member 62 is provided having a top surface 61 and an opposing bottom surface 63, wherein the bottom surface is to be brought into contact and bonded to a fibre layup of the shell member, such as a shell half. First, the lower surface 63 of the spar cap member 62 is treated with the primer composition, preferably a liquid primer composition, for example by using a spray gun 94 which can be moved along the arrow illustrated in Fig. 6a. However, other techniques can be used, such as application by a brush, or various other application techniques.

Next, heat is applied to the primer-treated surface 63 to provide an activated surface. This could be done, for example, by using a suitable heating device 95 such as an infrared device, which is moved along the spar cap member surface 63 as illustrated by the arrow in Fig. 6b. Preferably, the temperature applied to during the heating step is 90-120 °C.

Then, as illustrated in Figs. 6c and 6d, the spar cap member 62 is placed into the moulding cavity on top of at least part of a fibre layup such that at least part of said activated surface 63 of the spar cap member contacts the fibre layup 97. The fibre layup 97 has been prepared in a known way using a blade mould 96 with a moulding cavity 98 into which typically a number of fibre layers, such as glass fibre layers are placed, to form the shell part.

Next, the moulding cavity is infused with a resin. As illustrated in Fig. 6e, this can be done by placing a vacuum bag 99 on top of the fibre layup and the spar cap member, and then infusing resin from an inlet channel 100 in a VARTM process. The moulding cavity is preferably infused with a polyester resin, preferably with an unsaturated polyester resin.

Then, the resin is cured to form the hardened blade shell member. Preferably, the step of curing the resin to form the blade shell member comprises a free-radical crosslinking reaction between the silane compound and the unsaturated polyester resin, preferably between (meth)acrylate groups of the silane compound of the primer composition and the unsaturated polyester resin.

### Example 1

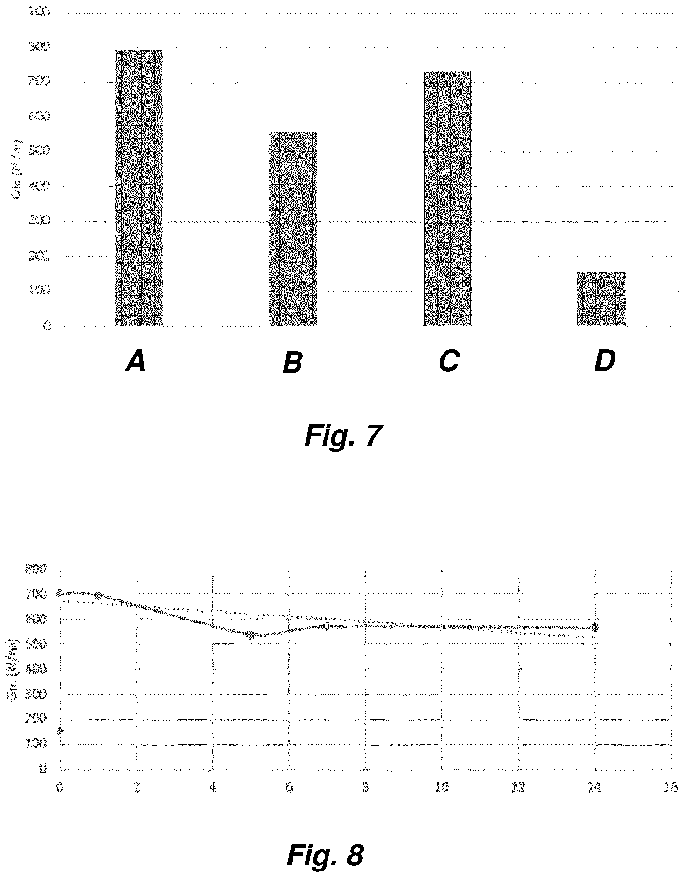

Fig. 7 is a chart showing critical energy release rates (GIC) measured under different conditions. The GIC is the value of the energy release rate G in a precracked specimen under plane-strain loading conditions, when the crack starts to grow. It is expressed in joules per square metre, J/m2, or N/m. Fig. 7 shows the GIC determined according to ISO/DIS 13586(en) for two joined blade components using the silane-containing primer in combination with an unsaturated polyester resin, wherein the polyester cure cycle was 16 hours at 40°C (column A), 4 days at room temperature (column B), 3 hours at 90 °C (column C), and without any primer (column D). It was surprisingly found that the GIC is around 5 times higher using the method of the present invention (columns A, B, C) as compared to the same curing with unsaturated polyester resin without using the silane-based primer (column D). It is thus seen that the method of the present invention relates in a bond with high resistance to unstable crack propagation.

### Example 2

The effect of humidity on a primed spar cap surface using the silane-based primer was tested over time, wherein a surface which has been treated with the primer and subsequently heated for activating the surface is exposed to a relative humidity of 80% at room temperature. Fig. 8 illustrates the time in days on the x-axis, whereas the y-axis is GIC in N/m. As seen in Fig. 8, only a minimal effect on bonding strength between two wind turbine blade components is seen over time. This demonstrates a surprising stability of the primer-treated wind turbine blade component for an extended time period.

### Example 3: Manufacturing of the primer composition

A primer composition according to one embodiment can be prepared by carrying out the following steps:
- adding dibasic ester Rhodiasolv^{®} RPDE (containing by weight 57-67 % dimethyl glutarate, 18-28 % dimethyl succinate, and 8-22 % dimethyl adipate) and 1-methoxy-2-propanol into a clean mixing vessel to provide a 1:1 ratio of dibasic ester and 1-methoxy-2-propanol by weight,
- adding distilled vinegar or a pre-blend of 7% wt acetic acid / 93% wt to the mixing vessel while slowly stirring,
- mixing for 5-10 minutes until a homogeneous mixture is achieved,
- adding Silquest A174NT (gamma-methacryloxypropyltrimethoxy silane), while slowly stirring, into the mixing vessel.
- stirring for 60 minutes.
- dispensing the resulting primer composition into containers with subsequent sealing.

In the final primer the weight percentages are 46.2% for dibasic ester rhodiasolv^{®} RPDE, 46.3% for 1-Methoxy-2-Propanol, 5% for the distilled vinegar (or the pre-blend of 7% wt acetic acid / 93% wt), and 2.5% for the Silquest A174NT.

The invention is not limited to the embodiments described herein and may be modified or adapted provided that it falls within the scope of the appended claims.

### List of reference numerals

- 4: tower
- 6: nacelle
- 8: hub
- 10: blades
- 14: blade tip
- 16: blade root
- 18: leading edge
- 20: trailing edge
- 30: root region
- 32: transition region
- 34: airfoil region
- 36: pressure side shell part
- 38: suction side shell part
- 40: shoulder
- 41: spar cap
- 42: fibre layers
- 43: sandwich core material
- 45: spar cap
- 46: fibre layers
- 47: sandwich core material
- 50: first shear web
- 51: core member
- 52: skin layers
- 55: second shear web
- 56: sandwich core material of second shear web
- 57: skin layers of second shear web
- 60: filler ropes
- 61: top surface of spar cap
- 62: reinforcing structure / spar cap
- 63: bottom surface of spar cap
- 64: pultrusion plate

- 66: stack of pultrusion plates
- 74: tip end of reinforcing structure
- 76: root end of reinforcing structure
- 78: front edge of reinforcing structure
- 80: rear edge of reinforcing structure
- 81: top surface of pultrusion plate
- 82: bottom surface of pultrusion plate
- 83: first lateral surface of pultrusion plate
- 84: second lateral surface of pultrusion plate
- 85: organo alkoxysilane monomer
- 86: hydrolyzed organo alkoxysilane monomer
- 87: polymeric organo alkoxysilane
- 88: hydrogen bonds
- 89: covalent bonds
- 90: hydrolysis
- 91: condensation / polymerization
- 92: treatment of spar cap with primer composition
- 93: heating
- 94: spray gun
- 95: heating device
- 96: blade mould
- 97: fibre layup
- 98: moulding cavity
- 99: vacuum bag
- 100: resin inlet channel
- L: length
- r: distance from hub
- R: rotor radius
- Se: spanwise extent of reinforcing structure

## Claims

1. A method of manufacturing a wind turbine blade shell member (36, 38), the method comprising the steps of
providing a blade mould (96) for the blade shell member, the blade mould comprising a moulding cavity (98),
arranging one or more layers of fibre material in the moulding cavity to provide a fibre layup (97),
providing a pre-manufactured spar cap member (62),
treating a surface (63) of the spar cap member with a primer composition to provide a primer-treated surface,
applying heat to the primer-treated surface of the spar cap member to provide an activated surface,
placing the spar cap member (62) into the moulding cavity on top of at least part of the fibre layup (97), such that at least part of said activated surface of the spar cap member contacts the fibre layup,
infusing the moulding cavity with resin,
curing the resin to form the blade shell member,
wherein the primer composition comprises a silane compound.

2. A method according to claim 1, wherein the silane compound comprises a hydroxysilylalkyl methacrylate or a (poly)condensation product of a hydroxysilylalkyl methacrylate.

3. A method according to claims 1 or 2, wherein the silane compound is polymerizable to a polymer comprising a repeating unit of formula (I): 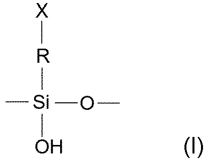 wherein X is an organic group, preferably a non-hydrolyzable organic group, preferably selected from amino, vinyl, epoxy, (meth)acrylate, sulfur, alkyl, alkenyl, alkynyl, most preferably methacrylate, and wherein R is a spacer such as -(CH₂)ₙ-, wherein n is 0 to 1000, preferably 1-5, most preferably 3.

4. A method according to any of the preceding claims, wherein the pre-manufactured spar cap member (62) comprises a vinyl ester resin.

5. A method according to any of the preceding claims, wherein providing the pre-manufactured spar cap member (62) comprises pultruding a vinyl ester resin-impregnated fibre material comprising carbon fibres, and curing the vinyl ester resin to provide the pre-manufactured spar cap member.

6. A method according to any of the preceding claims, wherein the step of applying heat to the primer-treated surface comprises heating said primer-treated surface to a temperature of 80-130°C, preferably 90-120 °C.

7. A method according to any of the preceding claims, wherein the step of applying heat to the primer-treated surface comprises heating said primer-treated surface to a temperature of 80-130°C, preferably 90-120 °C, for a time period of 3-60 minutes, preferably 5-30 minutes.

8. A method according to any of the preceding claims, wherein in the step of infusing the moulding cavity with resin, the moulding cavity is infused with a polyester resin, preferably an unsaturated polyester resin, to co-infuse the fibre layup and the spar cap member.

9. A method according to any of the preceding claims, wherein the resin used in the step of infusing the moulding cavity with resin is an unsaturated polyester resin, and wherein the step of curing the resin to form the blade shell member comprises a free-radical crosslinking reaction between the silane compound, or a polymer thereof, and the unsaturated polyester resin, preferably between the (meth)acrylate groups of the silane compound of the primer composition, or a polymer thereof, and the unsaturated polyester resin.

10. A method according to any of the preceding claims, wherein the primer composition comprises a carrier solvent, wherein the carrier solvent comprises
1-methoxy-2-propanol, and
an ester of a dicarboxylic acid, such as dimethyl glutarate, dimethyl succinate and dimethyl adipate or mixtures thereof, such as a mixture containing 57-67 wt% dimethyl glutarate, 18-28 wt% dimethyl succinate, and 8-22 wt% dimethyl adipate.

11. A method according to claim 10, wherein the weight ratio of 1-methoxy-2-propanol to the ester of a dicarboxylic acid is between 1:2 to 2:1, preferably from 1:1.2 to 1.2:1.

12. A method according to any of the preceding claims, wherein the primer composition has a flash point of at least 39 °C.

13. A wind turbine blade shell member obtainable by the method of any of claims 1-12.

14. Use of a silane-containing primer composition to improve the bonding between a first wind turbine blade component (62) and a second wind turbine blade component (97), by treating a surface of the first wind turbine blade component and/or of the second wind turbine blade component with the primer composition prior to joining and co-infusing the first wind turbine blade component to the second wind turbine blade component with a resin.

15. Use according to claim 14, further comprising applying heat to the primer-treated surface of the first wind turbine blade component and/or to the primer-treated surface of the second wind turbine blade component to provide an activated surface prior to joining and co-infusing the first wind turbine blade component to the second wind turbine blade component with a resin, preferably wherein the resin is a polyester resin, such as an unsaturated polyester resin, preferably wherein the blade components are joined along the primer-treated surface(s), preferably wherein the second component comprises a vinyl ester resin and/or has been manufactured by infusing a fibre material with a vinyl ester resin, preferably wherein the fibre material comprises carbon fibres.

## Patentansprüche

1. Verfahren zur Herstellung eines Schalenelements (36, 38) einer Windturbinenschaufel, wobei das Verfahren die folgenden Schritte umfasst
Bereitstellen einer Schaufelform (96) für das Schalenelement, wobei die Schaufelform einen Formhohlraum (98) umfasst,
Anordnen einer oder mehrerer Lagen Fasermaterial in dem Formhohlraum, um eine Faserauflage (97) bereitzustellen,
Bereitstellen eines vorgefertigten Holmgurts (62),
Behandeln einer Oberfläche (63) des Holmgurts mit einer Primerzusammensetzung, um eine mit Primer behandelte Oberfläche bereitzustellen,
Aufbringen von Wärme auf die mit Primer behandelte Oberfläche des Holmgurts, um eine aktivierte Oberfläche bereitzustellen,
Einbringen des Holmgurts (62) in den Formhohlraum auf mindestens einem Teil der Faserauflage (97), so dass mindestens ein Teil der genannten aktivierten Oberfläche des Holmgurts die Faserauflage kontaktiert,
Infundieren des Formhohlraums mit Harz,
Aushärten des Harzes, um das Schalenelement zu bilden,
wobei die Primerzusammensetzung eine Silanverbindung umfasst.

2. Verfahren nach Anspruch 1, wobei die Silanverbindung ein Hydroxysilylalkylmethacrylat oder ein (Poly)kondensationsprodukt eines Hydroxysilylalkylmethacrylats umfasst.

3. Verfahren nach Anspruch 1 oder Anspruch 2, wobei die Silanverbindung zu einem Polymer polymerisierbar ist, das eine Wiederholungseinheit der Formel (I) umfasst: 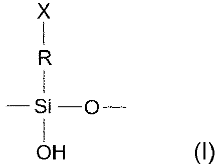 wobei X eine organische Gruppe ist, bevorzugt eine nicht-hydrolysierbare organische Gruppe, bevorzugt ausgewählt aus Amino, Vinyl, Epoxy, (Meth)acrylat, Schwefel, Alkyl, Alkenyl, Alkynyl, besonders bevorzugt Methacrylat, und wobei R ein Abstandshalter wie -(CH₂)ₙ- ist, wobei n 0 bis 1000 ist, bevorzugt 1-5, besonders bevorzugt 3.

4. Verfahren nach einem der vorstehenden Ansprüche, wobei der vorgefertigte Holmgurt (62) ein Vinylesterharz umfasst.

5. Verfahren nach einem der vorstehenden Ansprüche, wobei das Bereitstellen des vorgefertigten Holmgurts (62) das Pultrudieren eines mit Vinylesterharz imprägnierten Fasermaterials, das Kohlenstofffasern umfasst, und das Aushärten des Vinylesterharzes umfasst, um den vorgefertigten Holmgurt bereitzustellen.

6. Verfahren nach einem der vorstehenden Ansprüche, wobei der Schritt des Aufbringens von Wärme auf die mit Primer behandelte Oberfläche das Erhitzen der genannten mit Primer behandelten Oberfläche auf eine Temperatur von 80-130°C, bevorzugt 90-120 °C, umfasst.

7. Verfahren nach einem der vorstehenden Ansprüche, wobei der Schritt des Aufbringens von Wärme auf die mit Primer behandelte Oberfläche das Erhitzen der genannten mit Primer behandelten Oberfläche auf eine Temperatur von 80-130°C, bevorzugt 90-120 °C, für einen Zeitraum von 3-60 Minuten, bevorzugt 5-30 Minuten, umfasst.

8. Verfahren nach einem der vorstehenden Ansprüche, wobei in dem Schritt des Infundierens des Formhohlraums mit Harz der Formhohlraum mit einem Polyesterharz, bevorzugt einem ungesättigten Polyesterharz, infundiert wird, um die Faserauflage und den Holmgurt zu koinfundieren.

9. Verfahren nach einem der vorstehenden Ansprüche, wobei das in dem Schritt des Infundierens des Formhohlraums mit Harz verwendete Harz ein ungesättigtes Polyesterharz ist, und wobei der Schritt des Aushärtens des Harzes, um das Schalenelement zu bilden, eine durch freie Radikale vermittelte Vernetzungsreaktion zwischen der Silanverbindung oder einem Polymer davon und dem ungesättigten Polyesterharz umfasst, bevorzugt zwischen den (Meth)acrylatgruppen der Silanverbindung der Primerzusammensetzung oder einem Polymer davon und dem ungesättigten Polyesterharz.

10. Verfahren nach einem der vorstehenden Ansprüche, wobei die Primerzusammensetzung ein Trägerlösemittel umfasst, wobei das Trägerlösemittel Folgendes umfasst
1-methoxy-2-propanol, und
einen Ester einer Dicarbonsäure, wie Dimethylglutarat, Dimethylsuccinat und Dimethyladipat oder Mischungen davon, wie eine Mischung, die 57-67 wt% Dimethylglutarat, 18-28 wt% Dimethylsuccinat, und 8-22 wt% Dimethyladipat enthält.

11. Verfahren nach Anspruch 10, wobei das Gewichtsverhältnis von 1-methoxy-2-propanol zu dem Ester einer Dicarbonsäure zwischen 1:2 und 2:1, bevorzugt von 1:1,2 bis 1,2:1 liegt.

12. Verfahren nach einem der vorstehenden Ansprüche, wobei die Primerzusammensetzung einen Flammpunkt von mindestens 39 °C aufweist.

13. Schalenelement einer Windturbinenschaufel, erhältlich durch das Verfahren nach einem der Ansprüche 1-12.

14. Verwendung einer silanhaltigen Primerzusammensetzung zur Verbesserung der Verklebung zwischen einem ersten Windturbinenschaufelbauteil (62) und einem zweiten Windturbinenschaufelbauteil (97), durch Behandeln einer Oberfläche des ersten Windturbinenschaufelbauteils und/oder des zweiten Windturbinenschaufelbauteils mit der Primerzusammensetzung vor dem Fügen und dem Koinfundieren des ersten Windturbinenschaufelbauteils zu dem zweiten Windturbinenschaufelbauteil mit einem Harz.

15. Verwendung nach Anspruch 14, weiter umfassend das Aufbringen von Wärme auf die mit Primer behandelte Oberfläche des ersten Windturbinenschaufelbauteils und/oder auf die mit Primer behandelte Oberfläche des zweiten Windturbinenschaufelbauteils, um vor dem Fügen und dem Koinfundieren des ersten Windturbinenschaufelbauteils zu dem zweiten Windturbinenschaufelbauteil mit einem Harz eine aktivierte Oberfläche bereitzustellen, wobei bevorzugt das Harz ein Polyesterharz ist, wie ein ungesättigtes Polyesterharz, bevorzugt wobei die Schaufelbauteile entlang der mit Primer behandelten Oberfläche(n) gefügt werden, bevorzugt wobei das zweite Bauteil ein Vinylesterharz umfasst und/oder hergestellt worden ist durch Infundieren eines Fasermaterials mit einem Vinylesterharz, bevorzugt wobei das Fasermaterial Kohlenstofffasern umfasst.

## Revendications

1. Procédé de fabrication d'un élément (36, 38) de coque de pale d'éolienne, le procédé comprenant les étapes consistant à
fournir un moule de pale (96) pour l'élément de coque de pale, le moule de pale comprenant une cavité de moulage (98),
disposer une ou plusieurs couches de matériau fibreux dans la cavité de moulage pour fournir une superposition de fibres (97),
fournir un élément préfabriqué de semelle de longeron (62),
traiter une surface (63) de l'élément de semelle de longeron avec une composition d'apprêt pour fournir une surface traitée à l'apprêt,
appliquer de la chaleur à la surface traitée à l'apprêt de l'élément de semelle de longeron pour fournir une surface activée,
placer l'élément de semelle de longeron (62) dans la cavité de moulage au-dessus d'au moins une partie de la superposition de fibres (97), de telle sorte qu'au moins une partie de ladite surface activée de l'élément de semelle de longeron est en contact avec la superposition de fibres,
infuser la cavité de moulage avec une résine,
faire durcir la résine pour former l'élément de coque de pale,
dans lequel la composition d'apprêt comprend un composé silane.

2. Procédé selon la revendication 1, dans lequel le composé silane comprend un méthacrylate d'hydroxysilylalkyle ou un produit de (poly)condensation d'un méthacrylate d'hydroxysilylalkyle.

3. Procédé selon la revendication 1 ou la revendication 2, dans lequel le composé silane est polymérisable en un polymère comprenant une unité répétitive de formule (I) : 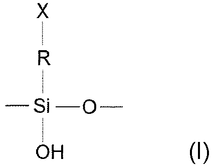 dans laquelle X est un groupe organique, de préférence un groupe organique non hydrolysable, de préférence sélectionné parmi amino, vinyle, époxy, (méth)acrylate, soufre, alkyle, alcényle, alcynyle, le plus préférentiellement le méthacrylate, et dans laquelle R est un espaceur tel que -(CH₂)ₙ-, dans laquelle n vaut de 0 à 1000, de préférence de 1 à 5, le plus préférentiellement 3.

4. Procédé selon l'une quelconque des revendications précédentes, dans lequel l'élément préfabriqué de semelle de longeron (62) comprend une résine d'ester vinylique.

5. Procédé selon l'une quelconque des revendications précédentes, dans lequel la fourniture de l'élément préfabriqué de semelle de longeron (62) comprend la pultrusion d'un matériau fibreux imprégné de résine d'ester vinylique comprenant des fibres de carbone, et le durcissement de la résine d'ester vinylique pour fournir l'élément préfabriqué de semelle de longeron.

6. Procédé selon l'une quelconque des revendications précédentes, dans lequel l'étape d'application de chaleur à la surface traitée à l'apprêt comprend le chauffage de ladite surface traitée à l'apprêt à une température de 80 à 130 °C, de préférence de 90 à 120 °C.

7. Procédé selon l'une quelconque des revendications précédentes, dans lequel l'étape d'application de chaleur à la surface traitée à l'apprêt comprend le chauffage de ladite surface traitée à l'apprêt à une température de 80 à 130 °C, de préférence de 90 à 120 °C, pendant une période de temps de 3 à 60 minutes, de préférence de 5 à 30 minutes.

8. Procédé selon l'une quelconque des revendications précédentes, dans lequel, à l'étape d'infusion de la cavité de moulage avec une résine, la cavité de moulage est infusée avec une résine de polyester, de préférence une résine de polyester insaturée, pour co-infuser la superposition de fibres et l'élément de semelle de longeron.

9. Procédé selon l'une quelconque des revendications précédentes, dans lequel la résine utilisée à l'étape d'infusion de la cavité de moulage avec une résine est une résine de polyester insaturée, et dans lequel l'étape de durcissement de la résine pour former l'élément de coque de pale comprend une réaction de réticulation par radicaux libres entre le composé silane, ou un polymère de celui-ci, et la résine de polyester insaturée, de préférence entre les groupes (méth)acrylate du composé silane de la composition d'apprêt, ou un polymère de celui-ci, et la résine de polyester insaturée.

10. Procédé selon l'une quelconque des revendications précédentes, dans lequel la composition d'apprêt comprend un solvant porteur, dans lequel le solvant porteur comprend du 1-méthoxy-2-propanol, et
un ester d'un acide dicarboxylique, tel que le glutarate de diméthyle, le succinate de diméthyle et l'adipate de diméthyle ou des mélanges de ceux-ci, tels qu'un mélange contenant de 57 à 67 % en poids de glutarate de diméthyle, de 18 à 28 % en poids de succinate de diméthyle, et de 8 à 22 % en poids d'adipate de diméthyle.

11. Procédé selon la revendication 10, dans lequel le rapport pondéral de 1-méthoxy-2-propanol sur l'ester d'un acide dicarboxylique va de 1:2 à 2:1, de préférence de 1:1,2 à 1,2:1.

12. Procédé selon l'une quelconque des revendications précédentes, dans lequel la composition d'apprêt présente un point d'éclair d'au moins 39 °C.

13. Élément de coque de pale d'éolienne pouvant être obtenu par le procédé selon l'une quelconque des revendications 1 à 12.

14. Utilisation d'une composition d'apprêt contenant un silane pour améliorer la liaison entre un premier composant (62) de pale d'éolienne et un deuxième composant (97) de pale d'éolienne, par le traitement d'une surface du premier composant de pale d'éolienne et/ou du deuxième composant de pale d'éolienne avec la composition d'apprêt avant d'assembler et de co-infuser le premier composant de pale d'éolienne au deuxième composant de pale d'éolienne avec une résine.

15. Utilisation selon la revendication 14, comprenant en outre
l'application de chaleur à la surface traitée à l'apprêt du premier composant de pale d'éolienne et/ou à la surface traitée à l'apprêt du deuxième composant de pale d'éolienne pour fournir une surface activée avant d'assembler et de co-infuser le premier composant de pale d'éolienne au deuxième composant de pale d'éolienne avec une résine, de préférence dans laquelle
la résine est une résine de polyester, telle qu'une résine de polyester insaturée, de préférence dans laquelle les composants de pale sont assemblés le long de la(des) surface(s) traitée(s) à l'apprêt, de préférence dans laquelle
le deuxième composant comprend une résine d'ester de vinyle et/ou a été fabriqué par infusion d'un matériau fibreux avec une résine d'ester de vinyle, de préférence dans laquelle le matériau fibreux comprend des fibres de carbone.
